Europäisches Patentamt

European Patent Office

Office européen des brevets

(11) Veröffentlichungsnummer: **0 004 986**
**B1**

(12) **EUROPÄISCHE PATENTSCHRIFT**

(21) Anmeldenummer: **79200159.6**

(22) Anmeldetag: **03.04.79**

(51) Int. Cl.³: **B 01 J 4/00, C 02 F 1/52, C 02 F 1/68, C 02 F 1/76**

(54) Vorrichtung zur Zuführung von gelösten Chemikalien in Wasser, und deren Anwendung

(30) Priorität: **17.04.78 DE 2816522**

(43) Veröffentlichungstag der Anmeldung:
**31.10.79 Patentblatt 79/22**

(45) Bekanntmachung des Hinweises auf die Patenterteilung:
**12.11.80 Patentblatt 80/23**

(84) Benannte Vertragsstaaten:
**BE CH DE FR GB IT LU NL SE**

(56) Entgegenhaltungen:
**DE - C - 723 114**
**US - A - 2 956 713**
**US - A - 3 758 276**

(73) Patentinhaber: **METALLGESELLSCHAFT AG**
**Reuterweg 14 Postfach 3724**
**D-6000 Frankfurt/M. 1 (DE)**

(72) Erfinder: **Lohrberg, Karl, Dipl.-Ing.**
**Breslauer Strasse 1**
**D-6056 Heusenstamm (DE)**
**Pfohl, Rainer, Dipl.-Ing.**
**Ketteler Strasse 15**
**D-6056 Heusenstamm (DE)**
**Schubert, Jürgen, Dipl.-Ing.**
**Fasanenstrasse 16**
**D-6381 Obererlenbach (DE)**
**Gritschke, Martin, Ing. grad.**
**Am Strassberg 10**
**D-6367 Karben 3 (DE)**
**Freytag, Jochen, Ing. grad.**
**Waldstrasse 55**
**D-6390 Usingen 1 (DE)**

(74) Vertreter: **Fischer, Ernst, Dr.**
**Reuterweg 14**
**D-6000 Frankfurt am Main 1 (DE)**

Courier Press, Leamington Spa, England.

Vorrichtung zur Zurführung von gelösten Chemikalien in Wässer, und deren Anwendung

Die Erfindung betrifft eine Vorrichtung zur Zuführung von gelösten Chemikalien in horizontal strömende Wässer mit einem Verteilerrohr und einer Mehrzahl von vom Verteilerrohr abwärts abgehenden Zuführorganen.

Bei zahlreichen Verfahren zur Wasserbehandlung ist es erforderlich, gelöste Chemikalien zuzusetzen, die beispielsweise dazu dienen, Verunreinigungen zu fällen oder auszuflocken oder Wasser zu desinfizieren.

Dabei kommt es wesentlich daruauf an, eine punktuelle Zuführung, die eine anschließende, beispielsweise mechanische, Vermischung erfordert, zu vermeiden und statt dessen bereits beim Chemikalieneintrag eine möglichst gute Verteilung zu erzielen. Sofern die Wasserbehandlung in einem besonderen Behälter erfolgt, ist eine gleichmäßige Verteilung der Chemikalien vergleichsweise einfach zu erzielen, indem beispielsweise speziell angeordnete Zuflußstutzen und Zwischenböden vorgesehen werden und durch radiale Trennwände eine Mehrzahl von Einzelkammern erzeugt wird, in die die Abflußleitungen für die Chemikalien münden (DE-AS 18 16 526). Ähnliches gilt im Verhältnis zum Rohrverteiler gemäß DE-ÒS 16 10 387, bei dem Medien unter Druck in eine zu behandelnde Flüssigkeit eingesprüht werden, in den über die Einsprühöffnungen elastische Schläuche mit Eigenspannung geschoben sind, die vom statischen Druck des Abwassers auf die Öffnungen im Sinne des Verschließens gedrückt und vom eingesprühten Medium zur Erzielung eines Durchlasses gelüftet werden.

Schwierigkeiten ergeben sich jedoch, wenn gelöste Chemikalien in horizontal strömende Wässer einzutragen sind. Dies ist beispielsweise der Fall, wenn Ströme von Meer- oder Flußwasser als Kühlwasser, z.B. für Kraftwerker, gechlort werden sollen. In diesem Fall besteht die Aufgabe, chlorhaltige Chemikalien mit Aktivchlorgehalten zwischen 2 und 8 g/l derart auf das Kühlwasser zu verteilen, daß eine Konzentration von etwa 2 bis 10 ppm resultiert. Es ist also erforderlich, eine Verdünnung etwa im Maßstab von 1 : 4000 vorzunehmen.

Aufgabe der Erfindung ist es, die bislang vorhandenen, insbesondere vorgenannten Unzulänglichkeiten zu beseitigen und eine Vorrichtung bereitzustellen, die konstruktiv einfach ist und eine hohe Verteilung der gelösten Chemikalien im zu behandelnden Wasser gestattet.

Die Aufgabe wird gelöst, indem man die eingangs genannte Vorrichtung entsprechend der Erfindung ausgestaltet als ein oberhalb des Wasserspiegels fixiertes Verteilerrohr 3 mit Schläuchen 6 unterschiedlicher Länge als Zuführorgane, deren Austrittsöffnungen im wesentlichen gleichmäßig über den Strömungsquerschnitt verteilt sind.

Der Grad der Verteilung der gelösten Chemikalien ist infolge der Verwendung von Schläuchen als Zuführorgane besonders intensiv, da die Schläuche in der Wasserströmung eine hin und her pendelnde Bewegung ausführen, die die Verteilung zusätzlich begünstigt.

Bei den mit der erfindungsgemäßen Vorrichtung zu behandelnden horizontal strömenden Wässern tritt häufig, beispielsweise infolge von Trocken- oder Regenperioden, der Umstand ein, daß sich das Niveau des Wasserstromes ändert. Damit auch in derartigen Fällen ein möglichst hoher Verteilungsgrad der gelösten Chemikalien erreicht wird, werden in vorteilhafter Ausgestaltung der Erfindung an den Zuführorganen in unterschiedlicher Höhe Schwimmkörper angeordnet. Sie gewährleisten, daß mit der Erhohung des Niveaus der Wasserströmung die Austrittsöffnungen der Zuführorgane angehoben und damit an den neu geschaffenen Strömungsquerschnitt angepaßt werden.

Je nach Anwendungsfall der erfindungsgemäßen Vorrichtung und Beschaffenheit der einzusetzenden Chemikalien sind Verteilerrohr und Zuführorgane aus geeigneten Materialien zu fertigen. Besonders vorteilhaft ist es, Verteilerrohr und Zuführorgan aus Chemikalienresistenten Materialien, wie Teflon®, Polypropylen oder Polyvinylchlorid, herzustellen.

Der bevorzugte Anwendungsfall der erfindungsgemäßen Vorrichtung liegt im Eintrag von Flüssigkeiten mit Aktivchlorgehalten in Kühlwasserströme. Aufgrund der Schnelligkeit und des hohen Grades der Verteilung können dann die zum Schutz von Pumpen, Kühlern etc. erforderlichen Grob- und Feinrechen sowie Siebe zur Entfernung von Treibgut strömungsseitig hinter der erfindungsgemäßen Vorrichtung angebracht werden. Im Unterschied zur Anbringung vor der Eintragsvorrichtung, also im ungechlorten Wasser, wird damit vermieden, daß die genannten Schutzvorrichtungen von Bewuchs durch Lebewesen, wie z.B. Muscheln etc., befallen werden. Wegen der zuvor erzielten guten Verteilung des Aktivchlors auf den Flüssigkeitsstrom können zudem die Schutzvorrichtungen aus herkömmlichen Stählen gefertigt werden, d.h. der Einsatz des sonst erforderlichen unkostenmäßig aufwendigen Titans als Werkstoff kann vermieden werden.

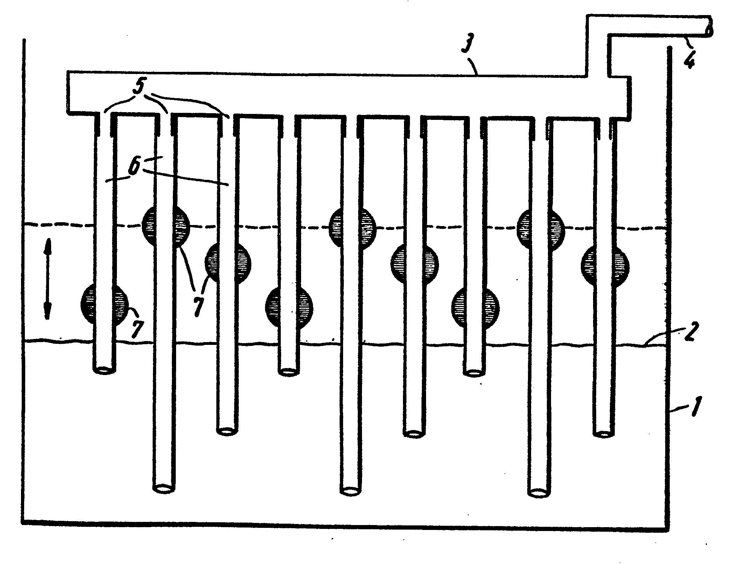

Die Erfindung wird anhand der Figur beispielsweise und näher eräutert.

1 veranschaulicht einen betonierten Kanal, der ein Kraftwerk mit Kühlwasser versorgt. Das Wasserniveau ist mit 2 bezeichnet und kann maximal bis zur gastrichelten Markierung ansteigen. In dem Kanal 1 ist ein Verteilerrohr 3 installiert, das über Leitung 4 mit Hypochloritlösung, beispielsweise einer Konzentration von 2 g/l (berechnet als Aktivchlor), versorgt wird. Am Verteilerrohr 3 befinden sich Rohrstutzen 5, über die Plastikschläuche 6 unterschiedlicher Länge gezogen sind, so daß die Austrittsöffnungen gleichmäßig über den Querschnitt der Wasserströmung verteilt sind. An den Schläuchen 6 befinden sich Schwimmkörper 7, die bei Anstieg der Wasserhöhe unterschiedlich schnell wirksam werden und bewirken, daß die Austrittsöffnungen angehoben werden und somit eine praktisch gleichmäßige Verteilung der Austrittsöffnungen über den Strömungsquerschnitt erhalten bleibt.

## Patentansprüche

1. Vorrichtung zur Zuführung von gelösten Chemikalien in horizontal strömende Wässer mit einem varteilerrohr und einer Mehrzahl von vom Verteilerrohr abwärts abgehenden Zuführorganen, *gekennzeichnet durch* ein oberhalb des Wasserspiegels fixiertes Verteilerrohr (3) mit Schläuchen (6) unterschiedlicher Länge als Zuführungsorgane, deren Austrittsöffnungen im wesentlichen gleichmäßig über den Strömungsquerschnitt verteilt sind.

2. Vorrichtung nach Anspruch 1, *gekennzeichnet durch* an den Zuführorganen (6) in unterschiedlicher Höhe angeordnete, eine bei schwankendem Niveau der Wasserströmung im wesentlichen gleichmäßige Verteilung der Austrittsöffnungen über den Strömungsquerschnitt gewährleistende Schwimmkörper (7).

3. Vorrichtung nach Anspruch 1 oder 2, *gekennzeichnet durch* Verteilerrohr (3) und Zuführorgane (6) aus Chemikalien-resistentem Material, wie Teflon®, Polypropylen oder Polyvinylchlorid.

4. Anwendung der Vorrichtung gemäß Anspruch 1, 2 oder 3 zum Eintrag von Flüssigkeiten mit Aktivchlorgehalt in Kühlwasserströme.

## Claims

1. Apparatus for supplying dissolved chemicals into horizontally flowing water comprising a manifold and a plurality of discharge conduits which extend downwardly from the manifold, characterized by a stationary manifold (3), which is disposed above the water level and is provided with discharge hoses (6), which differ in length and have outlet openings which are substantially evenly distributed throughout the cross-section of flow.

2. Apparatus according to claim 1, characterized in that floats (7) are provided on the discharge hoses (6) on different levels and ensure a substantially uniform distribution of the outlet openings throughout the cross-section of flow in case of fluctuations of the surface level of the flowing water.

3. Apparatus according to claim 1 or 2, characterized in that the manifold (3) and the discharge hoses (6) consist of chemical-resisting material, such as polytetrafluoroethylene, polypropylene or polyvinylchloride.

4. The use of an apparatus according to claim 1, 2 or 3 for supplying liquids which contain available chlorine into cooling water streams.

## Revendications

1. Dispositif pour l'introduction de produits chimiques dissous dans des eaux s'écoulant horizontalement, ledit dispositif comprenant un tuyau distributeur et une pluralité d'organes d'alimentation qui se détachent du tuyau distributeur en se dirigeant vers le bas, caractérisé par le fait qu'il contient un tuyau distributeur (3) fixé au-dessus du niveau de l'eau et pourvu de tuyaux flexibles (6) de longueur différente servant d'organes d'alimentation, les orifices de sortie desdits tuyaux flexibles étant en substance répartis régulièrement sur la section transversale du courant.

2. Dispositif suivant la revendication 1 caractérisé en ce que les organes d'alimentation (6) portent, à des hauteurs différentes, un flotteur qui assure en substance une répartition régulière des orifices de sortie sur la section transversale du courant en case de modification du niveau du courant d'eau.

3. Dispositif suivant la revendication 1 ou 2 caractérisé par le fait qu'il comporte un tuyau distributeur (3) et des organes d'alimentation (6) construits en un matériau résistant aux agents chimiques, tels que le Teflon®, le polypropylène ou le poly-chlorure de vinyle.

4. Application du dispositif suivant l'une des revendications 1, 2 ou 3 pour l'introduction de liquides contenant du chlore actif dans des courants d'eau de refroidissement.